(19) Europäisches Patentamt
European Patent Office
Office européen des brevets

(11) **EP 3 265 507 B1**

(12) **FASCICULE DE BREVET EUROPEEN**

(45) Date de publication et mention
de la délivrance du brevet:
**27.11.2019 Bulletin 2019/48**

(21) Numéro de dépôt: **16714469.0**

(22) Date de dépôt: **18.02.2016**

(51) Int Cl.:
***C08J 9/02*** *(2006.01)*     ***C08L 61/20*** *(2006.01)*

(86) Numéro de dépôt international:
**PCT/FR2016/050372**

(87) Numéro de publication internationale:
**WO 2016/139401 (09.09.2016 Gazette 2016/36)**

(54) **MOUSSES THERMODURCIES ET PROCEDE DE FABRICATION À PARTIR DE SUCRES REDUCTEURS ET D'AMINES**

WÄRMEHÄRTBARE SCHAUMSTOFFE UND VERFAHREN ZUR HERSTELLUNG DAVON AUS REDUZIERENDEN ZUCKERN UND AMINEN

THERMOSET FOAMS, AND METHOD FOR MANUFACTURING SAME FROM REDUCING SUGARS AND AMINES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **02.03.2015 FR 1551723**

(43) Date de publication de la demande:
**10.01.2018 Bulletin 2018/02**

(73) Titulaire: **Saint-Gobain Isover
92400 Courbevoie (FR)**

(72) Inventeur: **SAVONNET, Marie
75018 Paris (FR)**

(74) Mandataire: **Saint-Gobain Recherche
Département Propriété Industrielle
39 Quai Lucien Lefranc
93300 Aubervilliers (FR)**

(56) Documents cités:
**US-A1- 2007 027 283     US-A1- 2013 133 548**

EP 3 265 507 B1

**Description**

La présente invention concerne des mousses solides thermodurcies obtenues par réaction et moussage chimique d'une composition expansible contenant des réactifs de Maillard, à savoir des sucres réducteurs et des amines et sels d'amines.

La fabrication de produits d'isolation à base de laine minérale comprend généralement une étape de fabrication des fibres de verre ou de roche par un procédé de centrifugation. Sur leur trajet entre le dispositif de centrifugation et le tapis de collecte des fibres, on pulvérise sur les fibres encore chaudes une composition aqueuse d'encollage, également appelée liant, qui subit ensuite une réaction de thermodurcissement à des températures d'environ 200 °C.

Les résines phénoliques utilisées pendant plusieurs dizaines d'années en tant que liants ont été remplacées de plus en plus par des produits issus de sources renouvelables et n'émettant pas, ou très peu, de formaldéhyde, composé considéré comme pouvant nuire à la santé humaine.

On connaît ainsi de la demande WO 2007/014236 et de la demande US 2007/0027283 correspondante des compositions d'encollage, ou liants, à base de sucres réducteurs et d'amines ou de sels d'ammonium qui, entre autres par réaction de Maillard, durcissent et lient les fibres de verre sur lesquelles elles sont appliquées.

Les demandes WO 2009/019232 et WO 2009/019235 divulguent, de manière similaire, des liants pour fibres de verre contenant au moins un sucre réducteur et du phosphate, sulfate, nitrate ou carbonate d'ammonium, ces réactifs étant susceptibles de réagir par réaction de Maillard après application sur les fibres de verre directement après formation de celles-ci.

La demande US 2013/0133548 décrit des compositions aqueuses de liant pour fibres minérales à base d'aldéhydes, notamment de glucose, et d'amines. Ce document ne rapporte pas la formation de mousses. Aux exemples 2 - 14 une composition aqueuse contenant du dextrose et de l'hexaméthylènediamine est d'abord séchée à 100 °C, puis durcie par chauffage à une température de 200 °C. La réaction de Maillard ne se produit pas pendant l'étape de chauffage car la température est insuffisamment élevée et la composition sèche est certainement insuffisamment fluide pour qu'une mousse de forme au cours de l'étape de durcissement. Les polymères obtenus sont décrits comme durs.

La présente invention est basée sur la découverte surprenante que ces compositions d'encollage, lorsqu'on les chauffe sous forme plus concentrée au-delà d'une certaine température (environ 150 °C), au lieu de les pulvériser sur des fibres de verre chaudes, sont fortement moussantes. Un dégagement gazeux se produit en même temps que la réaction complexe de condensation des monomères (réaction de Maillard). La composition liquide de départ, introduite dans un récipient ouvert et exposée à une chaleur suffisante, augmente de volume, s'épaissit et finit par durcir, donnant lieu, au bout de quelques minutes à une mousse rigide de couleur foncée.

Ce moussage se produit en l'absence d'agent de moussage physique autre que l'eau éventuellement présente dans la composition de départ. La présence d'eau dans le mélange des réactifs (sucres réducteurs et amines/sel d'ammonium) n'est cependant pas indispensable au moussage et ne permet pas d'expliquer le phénomène observé. En effet, tant que la composition contient de l'eau liquide sa température n'excède pas environ 100 °C et la réaction de Maillard responsable du durcissement ne peut pas se produire. Autrement dit, lorsque la réaction de Maillard débute, la totalité de l'eau liquide initialement présente s'est évaporée.

Il devait donc se produire un phénomène de moussage chimique. Un ou plusieurs des ingrédients de départ devaient subir une décomposition thermique ou réagir entre eux en libérant un gaz en une quantité suffisante pour la production de mousses.

La présente invention a par conséquent pour objet l'utilisation d'une composition contenant

- un premier réactif choisi parmi les sucres réducteurs,
- un deuxième réactif choisi parmi les amines primaires, les sels d'addition d'acide d'amines primaires, les amines secondaires, les sels d'addition d'acide d'amines secondaires, les sels d'ammonium de formule $R^{n-} (NH_4^+)_n$ où n est un nombre entier au moins égal à 1 et $R^{n-}$ représente le résidu d'un acide organique ou minéral,

en tant que composition expansible et thermodurcissable pour la fabrication d'un produit isolant de type mousse.

Plus particulièrement la présente invention a pour objet un procédé de fabrication d'une mousse solide thermodurcie, utilisable en tant que produit d'isolation thermique, comprenant les étapes successives suivantes :

(a) mise à disposition d'une composition expansible et thermodurcissable contenant

- un premier réactif choisi parmi les sucres réducteurs,
- un deuxième réactif choisi parmi les amines primaires, les sels d'addition d'acide d'amines primaires, les amines secondaires, les sels d'addition d'acide d'amines secondaires, les sels d'ammonium de formule $R^{n-} (NH_4^+)_n$ où n est un nombre entier au moins égal à 1 et $R^{n-}$ représente le résidu d'un acide organique ou minéral.

la composition expansible et thermodurcissable contenant moins de 50 % en poids d'eau,

(b) introduction de la composition expansible et thermodurcissable dans un moule ou application de la composition expansible sur un support en un film d'une épaisseur au moins égale à 1 mm,

(c) chauffage de la composition expansible et thermodurcissable à une température au moins égale à 140 °C de manière à faire réagir le premier réactif avec le deuxième réactif et de former, par polymérisation et moussage chimique, un bloc de mousse solide thermodurcie, la quantité de composition expansible et thermodurcissable étant telle que le volume du bloc de mousse solide thermodurcie obtenu soit au moins égal à 500 cm³, et la composition expansible contenant en outre un ou plusieurs agents tensioactifs.

On entend par sucres réducteurs les hydrates de carbone de formule $C_n(H_2O)_p$ présentant au moins un groupe aldéhyde ou cétone (groupe réducteur). Les sucres réducteurs utilisables dans la présente invention englobent les oses (monosaccharides) et les osides (disaccharides, oligosaccharides et polysaccharides).

A titre d'exemples de monosaccharides, on peut citer ceux comportant de 3 à 8 atomes de carbone, de préférence les aldoses et avantageusement les aldoses contenant 5 à 7 atomes de carbone. Les aldoses particulièrement préférés sont les aldoses naturels (appartenant à la série D), notamment les hexoses tels que le glucose, le mannose et le galactose.

Le lactose ou le maltose sont des exemples de disaccharides utilisables en tant que sucres réducteurs.

On pourra également utiliser de manière avantageuse des hydrolysats d'amidon obtenus par hydrolyse enzymatique ou hydrolyse acide d'amidon. Le degré d'hydrolyse est généralement caractérisé par l'équivalent dextrose (DE), défini par la relation suivante :

$$DE = 100 \times \left( \frac{\text{nombre de liaisons glycosidiques rompues}}{\text{nombre de liaisons glycosidiques dans l'amidon initial}} \right)$$

Les hydrolysats ayant un DE inférieur à 20 moussent relativement peu et on utilisera de préférence les hydrolysats d'amidon présentant un DE supérieur à 20, également appelés sirops de glucose. Les hydrolysats ayant un DE compris entre 50 et 90 sont particulièrement préférés.

De manière générale tout oligomère ou précurseur d'un sucre réducteur susceptible de libérer dans les conditions de la réaction un sucre réducteur est considéré comme étant utilisable en tant que premier réactif dans la présente invention.

Le deuxième réactif peut être une amine primaire de formule $R^1NH_2$ ou une amine secondaire de formule $R^1R^2NH$ où $R^1$ et $R^2$ représentent indépendamment de préférence un résidu alkyle linéaire, cycloalkyle, alcényle, cycloalcényle ou aryle, contenant éventuellement un ou plusieurs hétéroatomes.

On peut citer à titre d'exemples d'amines l'éthylamine, la diéthylamine, la diméthylamine, l'éthylpropylamine, l'aniline, la 1-naphtylamine, la 2-naphtylamine et le para-aminophénol.

Le deuxième réactif peut également être un sel d'addition d'acide d'une telle amine primaire ou secondaire. Les acides utilisés pour la formation d'un tel sel sont par exemple les acides monocarboxyliques ou polycarboxyliques, l'acide sulfurique, l'acide nitrique, les acides organo-sulfoniques tels que le lignosulfonate, et l'acide phosphorique.

Les acides polycarboxyliques sont de préférence des acides dicarboxyliques, tricarboxyliques ou tetracarboxyliques.

Les acides dicarboxyliques englobent, par exemple, l'acide oxalique, l'acide malonique, l'acide succinique, l'acide glutarique, l'acide adipique, l'acide pimélique, l'acide subérique, l'acide azelaïque, l'acide sébacique, l'acide malique, l'acide tartrique, l'acide tartronique, l'acide aspartique, l'acide glutamique, l'acide fumarique, l'acide itaconique, l'acide maléique, l'acide traumatique, l'acide camphorique, l'acide phtalique et ses dérivés, notamment ceux contenant au moins un atome de bore ou de chlore, l'acide tétrahydrophtalique et ses dérivés, notamment ceux contenant au moins un atome de chlore tel que l'acide chlorendique, l'acide isophtalique, l'acide téréphtalique, l'acide mésaconique et l'acide citraconique ;

Les acides tricarboxyliques englobent, par exemple l'acide citrique, l'acide tricarballylique, l'acide 1,2,4-butanetricarboxylique, l'acide aconitique, l'acide hémimellitique, l'acide triméllitique et l'acide trimésique.

On peut citer comme acide tétracarboxylique, par exemple l'acide 1,2,3,4-butanetétracarboxylique et l'acide pyroméllitique.

Parmi les acides carboxyliques on utilisera de préférence l'acide citrique qui se dégrade dans les conditions réactionnelles et libère du $H_2O$, du $CO_2$ ainsi qu'un anhydride gazeux réactif.

Enfin, le deuxième réactif peut être un sel d'ammonium de formule

$$R^{n-}(NH_4^+)n$$

où n est un nombre entier au moins égal à 1 et $R^{n-}$ représente le résidu d'un acide organique ou minéral. L'acide organique ou minéral est de préférence choisi parmi ceux énumérés ci-dessus.

Les compositions expansibles et thermodurcissables utilisées dans la présente invention pour la formation de mousses solides contiennent généralement de l'eau. Cette eau joue essentiellement le rôle de solvant pour le premier et deuxième réactif et non pas le rôle d'agent de moussage physique, comme expliqué ci-avant.

Etant donné que la composition expansible utilisée dans le procédé de la présente invention n'a pas besoin d'être finement dispersée dans l'air, il est moins crucial que dans le cas d'un liant pour fibres minérales, de veiller à ce que sa viscosité soit suffisamment faible. Tandis qu'un liant aqueux pour fibres minérales comporte, au moment de la pulvérisation, au moins 90 %, voire 95 % d'eau, les compositions expansibles de la présente invention sont beaucoup plus concentrées et visqueuses.

Elles contiennent moins de 50 % en poids d'eau, plus avantageusement moins de 40 % en poids d'eau, en particulier au plus 35 % en poids, de préférence au plus 25 % en poids, plus préférentiellement au plus 15 % en poids et idéalement au plus 5 % en poids d'eau. Plus cette teneur initiale en eau est faible, plus le coût énergétique lié à la nécessaire évaporation de cette eau est réduit.

La teneur en matières sèches de la composition expansible avant chauffage est donc au moins égale à 50 % en poids, en particulier au moins égale à 65 % en poids, de préférence au moins égale à 75 %, plus préférentiellement au moins égale à 85 % en poids et idéalement au moins égale à 95 % en poids.

Les premier et deuxième réactifs représentent au total au moins 70 %, de préférence au moins 80 %, en particulier au moins 90 % du poids sec de la composition expansible.

Le premier réactif représente de préférence de 30 à 95 % en poids, en particulier de 60 à 90 % en poids et le deuxième réactif représente de préférence de 5 à 70 % en poids, de préférence de 10 à 40 % en poids du poids total des premier et deuxième réactifs.

Bien que les premier et deuxième réactifs soient les constituants majoritaires et essentiels de la composition expansible, celle-ci peut contenir un certain nombre d'autres adjuvants et additifs destinés à améliorer les propriétés des mousses thermodurcies finales ou à réduire le coût de production. La quantité totale de ces adjuvants et additifs ne dépasse toutefois de préférence pas 30 % du poids sec de la composition expansible.

Ainsi, la composition expansible contient un ou plusieurs agents tensioactifs destinés à réduire la dimension moyenne et la dispersion des tailles des pores de la mousse finale ou à faciliter l'incorporation d'une charge. La composition expansible contient avantageusement de 1 à 15 % en poids, de préférence de 2 à 10 % en poids, rapportés au poids sec de la composition expansible totale, d'un ou plusieurs agents tensioactifs.

La composition expansible utilisée dans la présente invention peut contenir en outre jusqu'à 20 % en poids, de préférence jusqu'à 10 % en poids, rapportés au poids sec de la composition expansible totale, d'une ou plusieurs charges minérales ou organiques.

Enfin, la composition expansible peut contenir un ou plusieurs autres additifs utilisés classiquement dans l'industrie de la mise en œuvre et transformation des polymères tels que des colorants, pigments, agents anti-bactériens ou anti-fongiques, agents ignifugeants, absorbeurs UV, agents hydrophobes. Ces additifs représentent au total de préférence au plus 10 % du poids sec de la composition.

La composition expansible est de préférence essentiellement exempte d'agent d'expansion physique organique.

Son pH est généralement compris entre 5 et 9.

Dans le procédé de la présente invention des compositions réactives, connues en tant que telles sous forme très diluée, sont donc utilisées de manière totalement différente de celle décrite dans les documents de l'état de la technique mentionnés en introduction. Elles ne sont pas pulvérisées sous forme de fines gouttelettes sur des fibres minérales chaudes en vue de la formation d'un matelas de fibres collées entre elles, mais restent sous forme compacte, non dispersée. Leur teneur en matières sèches est considérablement plus élevée que celle des compositions de l'état de la technique. Il faudra toutefois veiller à ce que le procédé selon l'invention soit mené de manière à ce que la viscosité des compositions expansibles et thermodurcissables reste suffisamment faible au moment du chauffage à 140 °C pour qu'une mousse puisse se former avant durcissement complet de la composition.

Lorsque la composition expansible est étalée sous forme d'un film continu sur un support, l'épaisseur du film, avant chauffage, c'est-à-dire avant expansion et durcissement, est de préférence au moins égale à 2 mm, en particulier au moins égale à 5 mm, et plus préférentiellement au moins égale à 10 mm.

Le volume du bloc de mousse formé peut varier entre de très larges limites. Lorsque la composition expansible est utilisée dans un procédé continu formant par exemple des bandes ou profilés de matériaux isolants, il est potentiellement infini. La composition expansible est utilisée pour former des blocs discrets, par exemple des plaques ou feuilles de mousses, sa quantité est telle que le volume de chaque bloc de mousse solide thermodurcie soit au moins égal à 500 cm$^3$, de préférence au moins égal à 0,001 m$^3$, en particulier au moins égal à 0,01 m$^3$.

Le bloc de mousse se présente de préférence sous forme d'une plaque.

Pour faire réagir les premier et deuxième réactifs il est nécessaire de chauffer la composition expansible à une température d'au moins 140 °C. Il est en effet connu que la réaction de Maillard entre un sucre réducteur et une amine ne se déroule qu'au-delà de cette température. La température réactionnelle sera de préférence comprise entre 150 °C et 180 °C. Cette température est, bien entendu, celle mesurée au cœur du mélange réactionnel.

Pour chauffer la composition expansible à l'étape (c) on pourra utiliser en principe n'importe quel moyen usuel connu dans le domaine de la mise en œuvre et transformation des polymères, tels que l'air chaud, le rayonnement thermique, les micro-ondes ou la mise en contact avec un support chaud (moule).

Bien entendu, la température du moyen de chauffage (étuve, support, moule) pourra être supérieure à la température réactionnelle mentionnée ci-dessus, par exemple comprise entre 160 et 210 °C.

La présente invention a également pour objet une mousse solide susceptible d'être obtenue par le procédé objet de la présente invention. Cette mousse est à base de mélanoïdines, les produits réactionnels complexes de la réaction de Maillard et peut contenir jusqu'à environ 25 % en poids d'autres composants, notamment de charges minérales. Il est important de noter que la teneur en ces autres composants, notamment en charges minérales, de la mousse durcie peut être supérieure celle de la composition expansible et thermodurcissable de départ. En effet la réaction de Maillard entre les premier et deuxième réactifs s'accompagne d'une libération de produits gazeux tels que $CO_2$, $NH_3$, $SH_2$, $SO_2$ et la fraction de mélanoïdines dans la mousse finale est donc inférieure à la fraction, en poids sec, des premier et deuxième réactifs de la composition initiale.

Les mousses solides préparées par le procédé de l'invention sont d'une couleur marron foncé à noire. Leur masse volumique est comprise entre 30 et 60 kg/m$^3$.

Elles présentent une porosité fermée avec un diamètre moyen des pores, déterminé par tomographie à rayons X, compris entre 100 et 800 nm.

## Exemples

On prépare plusieurs compositions expansibles thermodurcissables en ajoutant une solution aqueuse du deuxième réactif à une poudre du premier réactif. On agite le mélange à température ambiante jusqu'à dissolution de la poudre. Le Tableau 1 indique les quantités respectives des premier et deuxième réactifs, exprimées en matières sèches, ainsi que l'extrait sec total des compositions obtenues.

Chacune des compositions est introduite dans une coupelle en aluminium à fond plat (5 cm de diamètre) en un film ayant une épaisseur d'environ 1 mm. Les coupelles sont introduites dans une étuve chauffée à 200 °C. Au bout de 20 minutes, on les retire, on les laisse refroidir à température ambiante et l'on observe l'épaisseur de la mousse formée :

Tableau 1

| Réactif 1 | Réactif 2 | Extrait sec | Epaisseur de la mousse |
|---|---|---|---|
| 32,5 parts de D-glucose monohydrate | 67,5 parts de citrate d'ammonium | 63 % | +++ |
| 85 parts de D-glucose monohydrate | 15 parts de sulfate d'ammonium | 75 % | +++++ |
| 85 parts de maltodextrine (DE = 3 - 20) | 15 parts de sulfate d'ammonium | 61 % | + |
| 85 parts de D-glucose monohydrate | 15 parts de carbonate d'ammonium | 75 % | +++ |

- : moins de 0,5 cm
+ : 0,5 à 1 cm
++ : 1,1 à 2 cm
+++ : 2,1 à 3 cm
++++ : 3,1 à 4 cm
+++++ : plus de 4 cm

A titre de comparaison, on prépare une série de compositions identiques à celles du Tableau 1 à ceci près que le premier réactif (sucre réducteur) est remplacé par un polyol ne comportant pas de groupe réducteur. On les fait cuire pendant 20 minutes dans une étuve à 200 °C. Les résultats observés sont consignés dans le tableau 2.

Tableau 2

| Polyglycérol | Réactif 2 | Extrait sec | Mousse | aspect |
|---|---|---|---|---|
| 32,5 parties | 67,5 parties de citrate d'ammonium | 63 % | - | Croûte noire |
| 85 parties | 15 parties de sulfate d'ammonium | 75 % | - | Film transparent de couleur beige |
| 85 parties | 15 parties de carbonate d'ammonium | 75 % | - | Transparent incolore |

Seul l'échantillon contenant du citrate d'ammonium semble avoir réagi. Sa couleur a changé et sa consistance est dure, mais on n'observe pas de formation de mousse.

Pour les deux autres échantillons contenant, en tant que deuxième réactif, du sulfate d'ammonium et du carbonate d'ammonium, la couleur du mélange réactionnel n'a presque pas changé. On observe un film transparent très légèrement coloré, mais aucune formation de mousse.

**Revendications**

1.   Procédé de fabrication d'une mousse solide thermodurcie, comprenant les étapes successives suivantes :

    (a) mise à disposition d'une composition expansible et thermodurcissable contenant

        - un premier réactif choisi parmi les sucres réducteurs,
        - un deuxième réactif choisi parmi les amines primaires, les sels d'addition d'acide d'amines primaires, les amines secondaires, les sels d'addition d'acide d'amines secondaires, les sels d'ammonium de formule $R^{n-}(NH_4^+)_n$ où n est un nombre entier au moins égal à 1 et $R^{n-}$ représente le résidu d'un acide organique ou minéral,

    la composition expansible et thermodurcissable contenant moins de 50 % en poids d'eau,
    (b) introduction de la composition expansible et thermodurcissable dans un moule ou application de la composition expansible sur un support en un film d'une épaisseur au moins égale à 1 mm,
    (c) chauffage de la composition expansible et thermodurcissable à une température au moins égale à 140 °C de manière à faire réagir le premier réactif avec le deuxième réactif et de former, par polymérisation et moussage chimique, un bloc de mousse solide thermodurcie, la quantité de composition expansible et thermodurcissable étant telle que le volume du bloc de mousse solide thermodurcie obtenu soit au moins égal à 500 cm$^3$, et la composition expansible contenant en outre un ou plusieurs agents tensioactifs.

2.   Procédé selon la revendication 1, **caractérisé par le fait que** la quantité de composition expansible et thermodurcissable est telle que le volume du bloc de mousse solide thermodurcie obtenu soit au moins égal à 0,001 m$^3$, en particulier au moins égal à 0,01 m$^3$.

3.   Procédé selon la revendication 1 ou 2, **caractérisé par le fait que** l'épaisseur du film est au moins égale à 2 mm, de préférence au moins égale à 5 mm, en particulier au moins égale à 10 mm.

4.   Procédé selon l'une quelconque des revendications précédentes, **caractérisé par le fait que** le bloc de mousse solide thermodurcie est une plaque.

5.   Procédé selon l'une quelconque des revendications précédentes, **caractérisé par le fait que** la composition expansible contient au plus 35 % en poids, de préférence au plus 25 % en poids, plus préférentiellement au plus 15 % en poids et en particulier au plus 5 % en poids d'eau.

6.   Procédé selon l'une quelconque des revendications précédentes, **caractérisé par le fait que** les premier et deuxième réactifs représentent au total au moins 70 %, de préférence au moins 80 %, en particulier au moins 90 % du poids sec de la composition expansible.

7.   Procédé selon l'une quelconque des revendications précédentes, **caractérisé par le fait que** le premier réactif est choisi parmi le glucose et les hydrolysats d'amidon, de préférence les hydrolysats d'amidon ayant un équivalent dextrose (DE) supérieur à 20, en particulier compris entre 50 et 90.

8. Procédé selon l'une quelconque des revendications précédentes, **caractérisé par le fait que** la composition expansible contient en outre jusqu'à 20 % en poids, de préférence jusqu'à 10 % en poids, rapportés au poids sec de la composition expansible totale, d'une ou plusieurs charges minérales ou organiques.

9. Procédé selon l'une quelconque des revendications précédentes, **caractérisé par** le fait le premier réactif représente de 30 à 95 % en poids et que le deuxième réactif représente de 5 à 70 % en poids du poids total des premier et deuxième réactifs.

10. Mousse solide susceptible d'être obtenue par le procédé selon l'une quelconque des revendications précédentes.

11. Mousse solide selon la revendication 10, **caractérisée par le fait qu'**elle présente une masse volumique comprise entre 30 et 60 kg/m$^3$

12. Mousse solide selon la revendication 10 ou 11, **caractérisée par le fait qu'**elle présente une porosité fermée.

13. Mousse solide selon l'une des revendications 10 à 12, **caractérisée par le fait que** le diamètre moyen des pores déterminé par tomographie à rayons X est compris entre 100 et 800 nm.

14. Utilisation d'une composition contenant

- un premier réactif choisi parmi les sucres réducteurs,
- un deuxième réactif choisi parmi les amines primaires, les sels d'addition d'acide d'amines primaires, les amines secondaires, les sels d'addition d'acide d'amines secondaires, les sels d'ammonium de formule $R^{n-}$-$(NH_4^+)_n$ où n est un nombre entier au moins égal à 1 et $R^{n-}$ représente le résidu d'un acide organique ou minéral,

en tant que composition expansible et thermodurcissable pour la fabrication d'un produit isolant de type mousse.

## Patentansprüche

1. Verfahren zur Herstellung eines duroplastischen Hartschaumstoffs, das die folgenden aufeinanderfolgenden Schritte umfasst:

(a) Bereitstellen einer schäumbaren und wärmehärtbaren Zusammensetzung, enthaltend:

- ein erstes Reagens, ausgewählt aus reduzierenden Zuckern,
- ein zweites Reagens, ausgewählt aus primären Aminen, Säureadditionssalzen primärer Amine, sekundären Aminen, Säureadditionssalzen sekundärer Amine, Ammoniumsalzen der Formel $R^{n-}$-$(NH_4^+)_n$, wobei n eine ganze Zahl von mindestens gleich 1 ist und $R^{n-}$ für den Rest einer organischen oder anorganischen Säure steht,

wobei die schäumbare und wärmehärtbare Zusammensetzung weniger als 50 Gew.-% Wasser enthält,
(b) Einbringen der schäumbaren und wärmehärtbaren Zusammensetzung in eine Form oder Aufbringen der schäumbaren Zusammensetzung in Form eines mindestens 1 mm dicken Films auf einen Träger,
(c) Erwärmen der schäumbaren und wärmehärtbaren Zusammensetzung auf eine Temperatur, die mindestens gleich 140 °C ist, um das erste Reagens mit dem zweiten Reagens reagieren zu lassen und durch Polymerisation und chemisches Schäumen einen Block aus duroplastischem Hartschaumstoff zu bilden, wobei die Menge der schäumbaren und wärmehärtbaren Zusammensetzung derart ist, dass das Volumen des erhaltenen Blocks aus duroplastischem Hartschaumstoff mindestens gleich 500 cm$^3$ ist, und die schäumbare Zusammensetzung außerdem ein oder mehrere Tenside enthält.

2. Verfahren nach Anspruch 1, **dadurch gekennzeichnet, dass** die Menge der schäumbaren und wärmehärtbaren Zusammensetzung derart ist, dass das Volumen des erhaltenen Blocks aus duroplastischem Hartschaumstoff mindestens gleich 0,001 m$^3$, insbesondere mindestens gleich 0,01 m$^3$ ist.

3. Verfahren nach Anspruch 1 oder 2, **dadurch gekennzeichnet, dass** die Dicke der Folie mindestens gleich 2 mm, vorzugsweise mindestens gleich 5 mm, insbesondere mindestens gleich 10 mm ist.

**4.** Verfahren nach einem der vorhergehenden Ansprüche, **dadurch gekennzeichnet, dass** der Block aus duroplastischem Hartschaumstoff eine Platte ist.

**5.** Verfahren nach einem der vorhergehenden Ansprüche, **dadurch gekennzeichnet, dass** die schäumbare Zusammensetzung höchstens 35 Gew.-%, vorzugsweise höchstens 25 Gew.-%, stärker bevorzugt höchstens 15 Gew.-% und insbesondere höchstens 5 Gew.-% Wasser enthält.

**6.** Verfahren nach einem der vorhergehenden Ansprüche, **dadurch gekennzeichnet, dass** das erste und das zweite Reagens zusammen mindestens 70 %, vorzugsweise mindestens 80 %, insbesondere mindestens 90 % des Trockengewichts der schäumbaren Zusammensetzung ausmachen.

**7.** Verfahren nach einem der vorhergehenden Ansprüche, **dadurch gekennzeichnet, dass** das erste Reagens ausgewählt ist aus Glucose und Stärkehydrolysaten, vorzugsweise Stärkehydrolysaten mit einem Dextrose-Äquivalent (DE) größer als 20, insbesondere zwischen 50 und 90.

**8.** Verfahren nach einem der vorhergehenden Ansprüche, **dadurch gekennzeichnet, dass** die schäumbare Zusammensetzung außerdem bis zu 20 Gew.-%, vorzugsweise bis zu 10 Gew.-%, bezogen auf das Trockengewicht der gesamten schäumbaren Zusammensetzung, eines oder mehrerer mineralischer oder organischer Füllstoffe enthält.

**9.** Verfahren nach einem der vorhergehenden Ansprüche, **dadurch gekennzeichnet, dass** das erste Reagens 30 bis 95 Gew.-% und das zweite Reagens 5 bis 70 Gew.-% vom Gesamtgewicht des ersten und des zweiten Reagens ausmacht.

**10.** Hartschaumstoff, der durch das Verfahren nach einem der vorhergehenden Ansprüche erhalten werden kann.

**11.** Hartschaumstoff nach Anspruch 10, **dadurch gekennzeichnet, dass** er eine Dichte zwischen 30 und 60 kg/m$^3$ aufweist.

**12.** Hartschaumstoff nach Anspruch 10 oder 11, **dadurch gekennzeichnet, dass** er eine geschlossene Porosität aufweist.

**13.** Hartschaumstoff nach einem der Ansprüche 10 bis 12, **dadurch gekennzeichnet, dass** der durch Röntgentomographie bestimmte mittlere Porendurchmesser zwischen 100 und 800 nm liegt.

**14.** Verwendung einer Zusammensetzung, enthaltend:

- ein erstes Reagens, ausgewählt aus reduzierenden Zuckern,
- ein zweites Reagens, ausgewählt aus primären Aminen, Säureadditionssalzen primärer Amine, sekundären Aminen, Säureadditionssalzen sekundärer Amine, Ammoniumsalzen der Formel $R^{n-}(NH_4^+)_n$, wobei n eine ganze Zahl von mindestens gleich 1 ist und $R^{n-}$ für den Rest einer organischen oder anorganischen Säure steht,

als schäumbare und wärmehärtbare Zusammensetzung für die Herstellung eines Dämmprodukts vom Schaumstofftyp.

**Claims**

**1.** A process for the manufacture of solid thermoset foam, comprising the following successive stages:

(a) providing an expandable and thermosetting composition containing:

- a first reactant chosen from reducing sugars,
- a second reactant chosen from primary amines, primary amine acid addition salts, secondary amines, secondary amine acid addition salts, and ammonium salts of formula $R^{n-}(NH_4^+)_n$ where n is an integer at least equal to 1 and $R^{n-}$ represents the residue of an organic or inorganic acid,

the expandable and thermosetting composition containing less than 50% by weight of water,
(b) introducing the expandable and thermosetting composition into a mold or applying the expandable composition on a support so as to form a film having a thickness at least equal to 1 mm,

(c) heating the expandable and thermosetting composition to a temperature at least equal to 140°C, so as to react the first reactant with the second reactant and to form, by polymerization and chemical foaming, a block of solid thermoset foam,

the amount of expandable and thermosetting composition being such that the volume of the resulting block of solid thermoset foam is at least equal to 500 cm$^3$, and the expandable composition additionally containing one or more surface-active agents.

2. The process as claimed in claim 1, **characterized in that** the amount of expandable and thermosetting composition is such that the volume of the resulting block of solid thermoset foam is at least equal to 0.001 m$^3$ and in particular at least equal to 0.01 m$^3$.

3. The process as claimed in claim 1 or 2, **characterized in that** the thickness of the film is at least equal to 2 mm, preferably at least equal to 5 mm and in particular at least equal to 10 mm.

4. The process as claimed in any one of the preceding claims, **characterized in that** the block of solid thermoset foam is a slab.

5. The process as claimed in any one of the preceding claims, **characterized in that** the expandable composition contains at most 35% by weight, preferably at most 25% by weight, more preferably at most 15% by weight and in particular at most 5% by weight of water.

6. The process as claimed in any one of the preceding claims, **characterized in that** the first and second reactants represent, in total, at least 70%, preferably at least 80% and in particular at least 90% of the dry weight of the expandable composition.

7. The process as claimed in any one of the preceding claims, **characterized in that** the first reactant is chosen from glucose and starch hydrolysates, preferably starch hydrolysates having a dextrose equivalent (DE) of greater than 20, in particular of between 50 and 90.

8. The process as claimed in any one of the preceding claims, **characterized in that** the expandable composition additionally contains up to 20% by weight, preferably up to 10% by weight, with respect to the dry weight of the total expandable composition, of one or more inorganic or organic fillers.

9. The process as claimed in any one of the preceding claims, **characterized in that** the first reactant represents from 30 to 95% by weight and that the second reactant represents from 5 to 70% by weight of the total weight of the first and second reactants.

10. A solid foam obtainable by the process as claimed in any one of the preceding claims.

11. The solid foam as claimed in claim 10, **characterized in that** it has a density of between 30 and 60 kg/m$^3$.

12. The solid foam as claimed in claim 11 or 12, **characterized in that** it has a closed porosity.

13. The solid foam as claimed in anyone of claims 10 to 12, **characterized in that** the mean diameter of the pores, determined by X-ray tomography, is between 100 and 800 nm.

14. The use of a composition containing:

   - a first reactant chosen from reducing sugars,
   - a second reactant chosen from primary amines, primary amine acid addition salts, secondary amines, secondary amine acid addition salts, and ammonium salts of formula $R^{n-}(NH_4^+)_n$ where n is an integer at least equal to 1 and $R^{n-}$ represents the residue of an organic or inorganic acid,

as expandable and thermosetting composition for the manufacture of an insulating product of foam type.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2007014236 A
- US 20070027283 A
- WO 2009019232 A
- WO 2009019235 A
- US 20130133548 A